# EUROPEAN PATENT APPLICATION

(11) **EP 4 564 488 A1**
(43) Date of publication of application: **04.06.2025**
(21) Application number: 23850267.8
(22) Date of filing: 05.07.2023
(51) Int. Cl.: H01M 8/04119, B01D 63/04

(54) **CARTRIDGE FOR FUEL CELL HUMIDIFIER, AND FUEL CELL HUMIDIFIER**

(30) Priority: 04.08.2022 KR 20220097277; 10.08.2022 KR 20220099746; 10.08.2022 KR 20220099747
(71) Applicant: Kolon Industries, Inc., Seoul 07793 (KR)
(72) Inventor: LEE, Ah Reum, Seoul 07793 (KR); OH, Young Seok, Seoul 07793 (KR); LEE, Ji Yoon, Seoul 07793 (KR)
(74) Representative: Vossius & Partner Patentanwälte Rechtsanwälte mbB
(86) International application number: PCT/KR2023/009460
(87) International publication number: WO 2024/029758

(57) **Abstract**

The present invention relates to a cartridge for a fuel cell humidifier, and a fuel cell humidifier, wherein the cartridge is provided in the fuel cell humidifier that humidifies dry gas to be supplied to a fuel cell stack by using wet gas, and comprises: an inner case having openings at respective ends; an inner inlet formed in the inner case and configured to introduce first gas into the inner case; an inner outlet disposed at a position spaced apart from the inner inlet along a first axis direction and configured to discharge the first gas from the interior of the inner case; and a hollow fiber membrane bundle contained inside the inner case, wherein the hollow fiber membrane bundle comprises a plurality of interlaced hollow fiber membranes formed by interlacing at least two hollow fiber membranes.

## Description

### [TECHNICAL FIELD]

The present disclosure relates to a humidifier for a fuel cell configured to supply humidified gas to a fuel cell.

### [Background Art]

A fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC) .

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane or the proton exchange membrane is dried, power generation efficiency is abruptly reduced.

1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a membrane humidification method of supplying moisture to a gas fluid bed using a polymer separation membrane are used as methods of humidifying the polymer electrolyte membrane or the proton exchange membrane.

Among these methods, the membrane humidification method, which provides water vapor to air that is supplied to the polymer electrolyte membrane or the proton exchange membrane using a membrane configured to selectively transmit only water vapor included in off-gas in order to humidify the polymer electrolyte membrane or the proton exchange membrane, is advantageous in that it is possible to reduce the weight and size of a humidifier.

When a module is formed, a hollow fiber membrane having large transmission area per unit volume is suitable for a permselective membrane used in the membrane humidification method. That is, when a humidifier is manufactured using a hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at a high temperature and to reuse the collected moisture and heat through the humidifier.

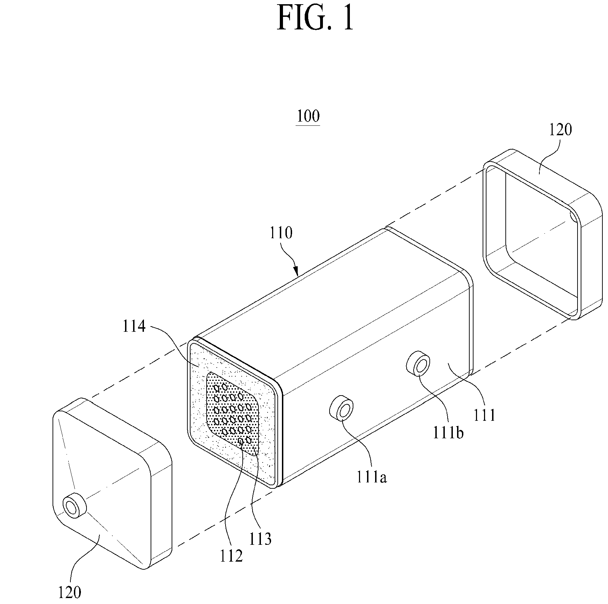

FIG. 1 is a schematic exploded perspective view of a conventional humidifier for a fuel cell.

As illustrated in FIG. 1, a conventional membrane humidification type humidifier 100 includes a humidifying module 110, in which moisture exchange is performed between air supplied from the outside and off-gas discharged from a fuel cell stack (not shown), and caps 120 coupled respectively to opposite ends of the humidifying module 110.

One of the caps 120 transmits air supplied from the outside to the humidifying module 110, and the other cap transmits air humidified by the humidifying module 110 to the fuel cell stack.

The humidifying module 110 includes a mid-case 111 having an off-gas inlet 111a and an off-gas outlet 111b and a hollow fiber membrane bundle 112 in the mid-case 111. Opposite ends of the hollow fiber membrane bundle 112 are potted in fixing layers 113. In general, each of the fixing layers 113 is formed by hardening a liquid polymer, such as liquid polyurethane resin, using a casting method. The fixing layers 113, in which ends of the hollow fiber membrane bundle 112 are potted, and resin layers 114 provided between the fixing layers 113 and the mid-case 111 isolate the inner spaces of the caps 120 from the inner space of the mid-case 111. Similarly to the fixing layers 113, each of the resin layers 114 is generally formed by hardening a liquid polymer, such as liquid polyurethane resin, using a casting method.

Air supplied from the outside flows along hollows of the hollow fiber membrane bundle 112. Off-gas introduced into the mid-case 111 through the off-gas inlet 111a comes into contact with outer surfaces of the hollow fiber membrane bundle 112, and is discharged from the mid-case 111 through the off-gas outlet 111b. When the off-gas comes into contact with the outer surfaces of the hollow fiber membrane bundle 112, moisture contained in the off-gas is transmitted through the hollow fiber membrane bundle 112 to humidify air flowing along the hollows of the hollow fiber membrane bundle 112. The humidified air is supplied to the fuel cell stack through a first cap 120, which is one of the caps 120.

In this case, conventionally, shaking, vibration, or the like occurs in the hollow fiber membrane bundle 112 due to the pressure of the off-gas introduced through the off-gas inlet 111a. As fatigue accumulates in the hollow fiber membrane bundle 112 due to such shaking, vibration, or the like, there is a conventional problem of the hollow fiber membrane bundle 112 being damaged or broken, e.g., cut. In addition, as the hollow-fiber membranes 112 are in repeated contact with the mid-case 111 due to shaking, vibration, or the like, there is a conventional problem of the hollow fiber membrane bundle 112 being damaged, e.g., scratched by friction.

### [Disclosure]

### [Technical Problem]

The present disclosure has been made in view of the above problems, and it is an object of the present disclosure to provide a cartridge of a humidifier for a fuel cell and a humidifier for a fuel cell capable of reducing the possibility of damage to or breakage of a hollow fiber membrane bundle due to shaking, vibration, or the like.

### [Technical Solution]

In order to accomplish the above object, the present disclosure may include the following constructions.

A cartridge of a humidifier for a fuel cell according to the present disclosure is provided in a humidifier for a fuel cell, the humidifier being configured to humidify dry gas to be supplied to a fuel cell stack using wet gas, and may include an inner case having openings formed at opposite ends, an inner inlet formed at the inner case, the inner inlet being configured to introduce first gas into the inner case, an inner outlet disposed spaced apart from the inner inlet in a first axis direction, the inner outlet being configured to discharge the first gas from the inner case, and a hollow fiber membrane bundle received in the inner case. The hollow fiber membrane bundle may include a plurality of braided hollow fiber membranes, each of the braided hollow fiber membranes being formed by braiding at least two hollow fiber membranes.

A humidifier for a fuel cell according to the present disclosure may include a humidifying module configured to humidify dry gas to be supplied to a fuel cell stack using wet gas, first cap coupled to one end of the humidifying module, and a second cap coupled to the other end of the humidifying module. The humidifying module may include a mid-case having open opposite ends and at least one cartridge received in the mid-case. The cartridge may include an inner case having openings formed at opposite ends, an inner inlet formed at the inner case, the inner inlet being configured to introduce first gas into the inner case, an inner outlet disposed spaced apart from the inner inlet in a first axis direction, the inner outlet being configured to discharge the first gas from the inner case, and a hollow fiber membrane bundle received in the inner case. The hollow fiber membrane bundle may include a plurality of braided hollow fiber membranes, each of the braided hollow fiber membranes being formed by braiding at least two hollow fiber membranes.

### [Advantageous Effects]

The present disclosure is implemented so as to reduce shaking, vibration, or the like occurring in a hollow fiber membrane bundle due to the flow of first gas introduced into and discharged from an inner case using braided hollow fiber membranes. Accordingly, the present disclosure may reduce fatigue accumulated in the hollow fiber membrane bundle, thereby reducing the possibility of damage to or breakage of the hollow fiber membrane bundle, such as cutting. Consequently, the present disclosure may increase the lifespan of the hollow fiber membrane bundle, thereby achieving an increase in utilization rate and a reduction in maintenance costs.

The present disclosure may reduce the number of times that the hollow fiber membrane bundle comes into contact with the inner case due to the flow of the first gas introduced into and discharged from the inner case using the braided hollow fiber membranes. Accordingly, the present disclosure may reduce the possibility of damage to the hollow fiber membrane bundle and the inner case, such as scratches caused by friction. Consequently, the present disclosure may increase not only the lifespan of the hollow fiber membrane bundle but also the lifespan of the inner case.

### [Description of Drawings]

FIG. 1 is a schematic exploded perspective view of a conventional humidifier for a fuel cell.
FIG. 2 is a schematic exploded perspective view of a humidifier for a fuel cell according to the present disclosure.
FIG. 3 is a schematic exploded sectional view showing the humidifier for a fuel cell according to the present disclosure, taken along line I-I of FIG. 2.
FIG. 4 is a schematic coupled sectional view showing the humidifier for a fuel cell according to the present disclosure, taken along line I-I of FIG. 2.
FIGs. 5 and 6 are schematic plan views of a cartridge of the humidifier for a fuel cell according to the present disclosure.
FIG. 7 is a schematic sectional view of the cartridge of the humidifier for a fuel cell according to the present disclosure, taken along line II-II of FIG. 6.
FIG. 8 is a schematic side view showing a braided hollow fiber membrane in the cartridge of the humidifier for a fuel cell according to the present disclosure.
FIG. 9 is a schematic side view showing a crimped hollow fiber membrane in the cartridge of the humidifier for a fuel cell according to the present disclosure.
FIG. 10 is a schematic side view showing a non-crimped hollow fiber membrane in the cartridge of the humidifier for a fuel cell according to the present disclosure.
FIG. 11 is a schematic side view showing a three-dimensionally crimped hollow fiber membrane in the cartridge of the humidifier for a fuel cell according to the present disclosure.
FIG. 12 is a schematic side view showing a three-dimensionally crimped hollow fiber membrane and a braided hollow fiber membrane in the cartridge of the humidifier for a fuel cell according to the present disclosure.
FIG. 13 is a schematic plan view of the cartridge of the humidifier for a fuel cell according to the present disclosure.
FIGs. 14 and 15 are schematic side views showing a part of a combined hollow fiber membrane in the cartridge of the humidifier for a fuel cell according to the present disclosure.

### [Best Mode]

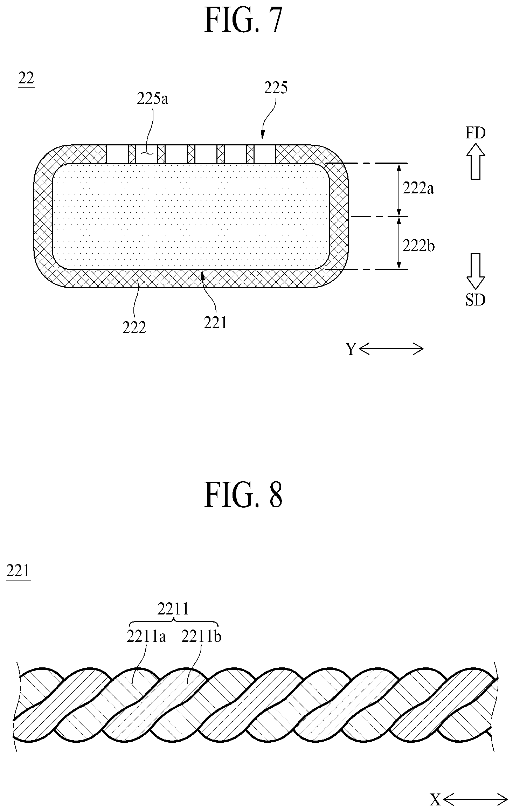

Hereinafter, an embodiment of a humidifier for a fuel cell according to the present disclosure will be described in detail with reference to the accompanying drawings. A cartridge of a humidifier for a fuel cell according to the present disclosure may be included in a humidifier for the fuel cell according to the present disclosure, and therefore the cartridge of the humidifier for the fuel cell according to the present disclosure will also be described while the humidifier for the fuel cell according to the present disclosure is described. Meanwhile, in FIG. 7, hollow fiber membranes are simply shown by hatching. The hatching in FIGs. 8 to 12, 14, and 15 is shown to distinguish between components.

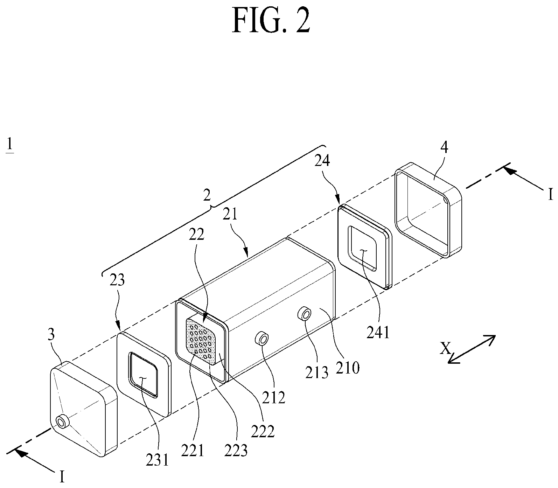

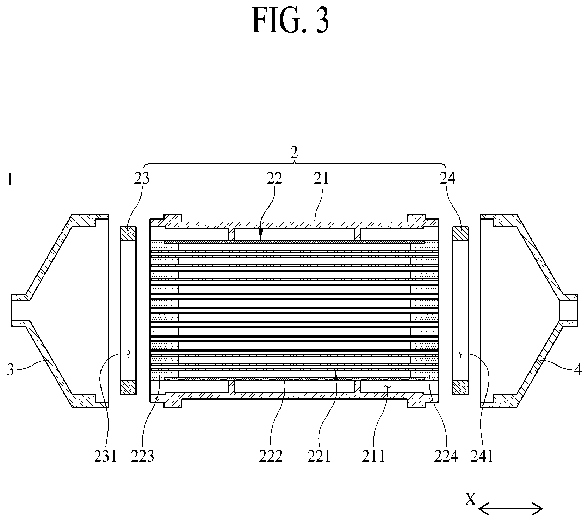

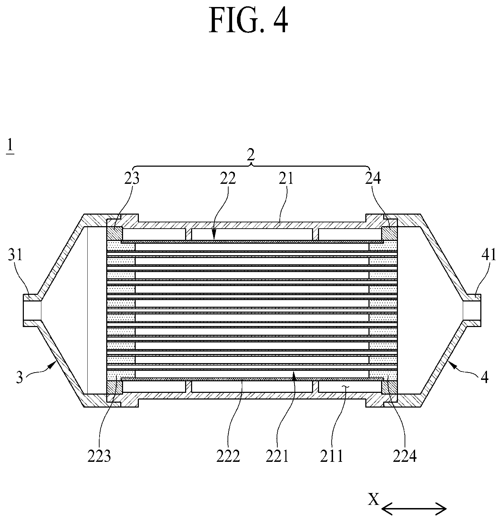

Referring to FIGs. 2 to 4, a humidifier 1 for a fuel cell according to the present disclosure is configured to humidify dry gas to be supplied to a fuel cell stack (not shown) using wet gas. The wet gas may be discharged from the fuel cell stack. The dry gas may be fuel gas or air. The dry gas may be humidified by the wet gas, and may be supplied to the fuel cell stack. The humidifier 1 for the fuel cell according to the present disclosure includes a humidifying module 2 configured to humidify dry gas, a first cap 3 coupled to one end of the humidifying module 2, and a second cap 4 coupled to the other end of the humidifying module 2.

Referring to FIGs. 2 to 4, the humidifying module 2 humidifies dry gas. The first cap 3 may be coupled to one end of the humidifying module 2. The second cap 4 may be coupled to the other end of the humidifying module 2. The humidifying module 2 may supply humidified dry gas to the fuel cell stack using first gas and second gas. When the first gas is dry gas, the second gas may be wet gas. In this case, the first gas may be humidified by the second gas and may then be supplied to the fuel cell stack. When the first gas is wet gas, the second gas may be dry gas. In this case, the second gas may be humidified by the first gas and may then be supplied to the fuel cell stack.

The humidifying module 2 includes a mid-case 21 and at least one cartridge 22.

The cartridge 22 is coupled to the mid-case 21. The cartridge 22 may be received in the mid-case 21. Opposite ends of the mid-case 21 are open. In this case, a receiving hole 211 may be formed in the mid-case 21. The receiving hole 211 may be formed so as to extend through the mid-case 21 in a first axis direction (X-axis direction). At least one cartridge 22 may be disposed in the receiving hole 211.

The mid-case 21 may include a mid body 210. The cartridge 22 is received in the mid body 210. The cartridge 22 may be disposed in the mid body 210 so as to be received in the mid body 210. At least one cartridge 22 may be received in the mid body 210. The receiving hole 211 may be formed through the mid body 210 in the first axis direction (X-axis direction).

A mid inlet 212 and a mid outlet 213 may be formed in the mid-case 21. The mid inlet 212 may introduce the first gas into the mid-case 21. The mid outlet 213 may discharge the first gas from the mid-case 21. Each of the mid outlet 213 and the mid inlet 212 may protrude from the mid-case 21.

The cartridge 22 is disposed in the mid-case 21. The cartridge 22 includes a hollow fiber membrane bundle 221. The hollow fiber membrane bundle 221 may be coupled to the cartridge 22 so as to be modularized. Consequently, the hollow fiber membrane bundle 221 may be installed in the mid-case 21 through the process of coupling the cartridge 22 to the mid-case 21. In the humidifier 1 for the fuel cell according to the present disclosure, therefore, ease in installation, separation, and replacement of the hollow fiber membrane bundle 221 may be improved. The hollow fiber membrane bundle 221 may include a plurality of hollow fiber membranes.

The cartridge 22 may include an inner case 222.

The inner case 222 has openings formed at opposite ends, and receives the hollow fiber membrane bundle 221. The hollow fiber membrane bundle 221 may be disposed in the inner case 222 so as to be modularized. The hollow fiber membrane bundle 221 may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof.

The cartridge 22 may include a first fixing layer 223. The first fixing layer 223 is configured to fix one end of the hollow fiber membrane bundle 221. The first fixing layer 223 may close the opening formed in one end of the inner case 222. In this case, the first fixing layer 223 may be formed so as not to block hollows of the hollow fiber membrane bundle 221. The first fixing layer 223 may be formed by hardening a liquid resin, such as liquid polyurethane resin, through a casting process. A part of the first fixing layer 223 may be located in the inner case 222, and the remaining part of the first fixing layer may protrude outward from the inner case 222. The first fixing layer 223 may fix one end of the hollow fiber membrane bundle 221 to the inner case 222.

The cartridge 22 may include a second fixing layer 224. The second fixing layer 224 is configured to fix the other end of the hollow fiber membrane bundle 221. The second fixing layer 224 may close the opening formed in the other end of the inner case 222. In this case, the second fixing layer 224 may be formed so as not to block the hollows of the hollow fiber membrane bundle 221. The second fixing layer 224 may be formed by hardening a liquid resin, such as liquid polyurethane resin, through a casting process. A part of the second fixing layer 224 may be located in the inner case 222, and the remaining part of the second fixing layer may protrude outward from the inner case 222. The second fixing layer 224 may fix the other end of the hollow fiber membrane bundle 221 to the inner case 222. Since the second fixed layer 224 and the first fixed layer 223 are formed so as not to block the hollows of the hollow fiber membrane bundle 221, the second gas may be supplied to the hollows of the hollow fiber membrane bundle 221 without obstruction by the second fixed layer 224 and the first fixed layer 223, and may be discharged from the hollows of the hollow fiber membrane bundle 221 without obstruction by the second fixed layer 224 and the first fixed layer 223.

Referring to FIGs. 2 to 6, the cartridge 22 may include an inner inlet 225 and an inner outlet 226.

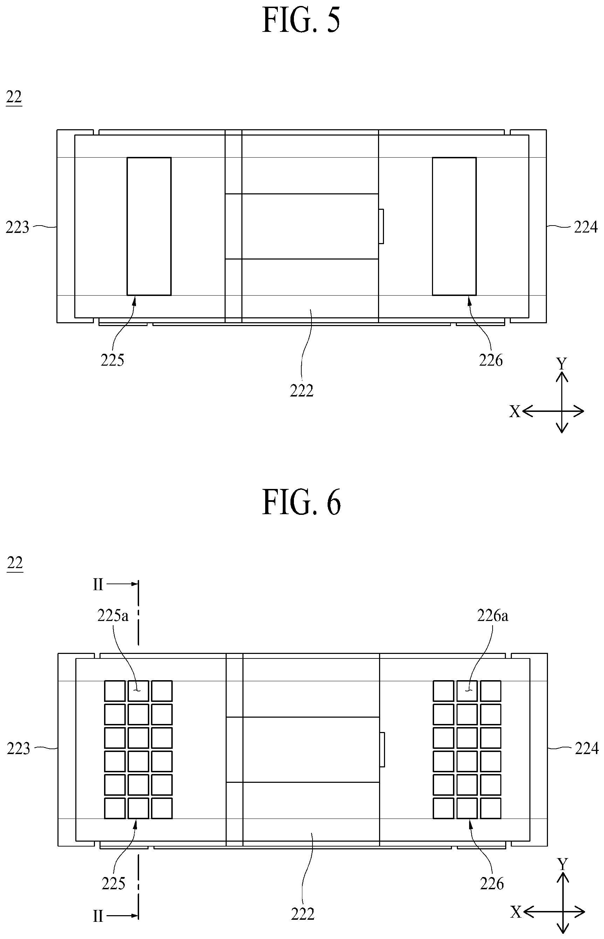

The inner inlet 225 is formed at the inner case 222. The inner inlet 225 may be formed at one side of the inner case 222. One side of the inner case 222 may be disposed so as to face any one of the side walls of the mid-case 21. The inner inlet 225 may introduce the first gas into the inner case 222. The inner inlet 225 may be formed through the inner case 222. As shown in FIG. 5, the inner inlet 225 may be implemented by one through-hole formed through the inner case 222. As shown in FIG. 6, the inner inlet 225 may be implemented by a plurality of through-holes formed through the inner case 222. In this case, the inner inlet 225 may include a plurality of inflow windows 225a formed through different parts of the inner case 222. The inflow windows 225a may be disposed spaced apart from each other in the first axis direction (X-axis direction) and a second axis direction (Y-axis direction) so as to form a matrix. The second axis direction (Y-axis direction) and the first axis direction (X-axis direction) are axial directions disposed perpendicular to each other.

The inner outlet 226 is formed at the inner case 222. The inner outlet 226 may be formed at one side of the inner case 222. The inner outlet 226 may discharge the first gas from the inner case 222. The inner outlet 226 may be formed through the inner case 222. As shown in FIG. 5, the inner outlet 226 may be implemented by one through-hole formed through the inner case 222. As shown in FIG. 6, the inner outlet 226 may be implemented by a plurality of through-holes formed through the inner case 222. In this case, the inner outlet 226 may include a plurality of outflow windows 226a formed through different parts of the inner case 222. The outflow windows 226a may be disposed spaced apart from each other in the first axis direction (X-axis direction) and the second axis direction (Y-axis direction) so as to form a matrix. The inner outlet 226 and the inner inlet 225 may be disposed spaced apart from each other in the first axis direction (X-axis direction).

When the first gas is wet gas, the first gas may be supplied to a space between an inner surface of the mid-case 21 and an outer surface of the cartridge 22 through the mid inlet 212, may be supplied into the cartridge 22 through the inner inlet 225, and may come into contact with an outer surface of the hollow fiber membrane bundle 221. During this process, moisture contained in the first gas may be transmitted through the hollow fiber membrane bundle 221 to humidify second gas flowing along the hollows of the hollow fiber membrane bundle 221. The humidified second gas may be discharged from the hollow fiber membrane bundle 221, and may then be supplied to the fuel cell stack through the first cap 3 or the second cap 4. After humidifying the second gas, the first gas may be discharged to the space between the outer surface of the cartridge 22 and the inner surface of the mid-case 21 through the inner outlet 226, and may be discharged from the mid-case 21 through the mid outlet 213. In this case, the first gas may be off-gas discharged from the fuel cell stack.

When the first gas is dry gas, the first gas may be supplied to the space between the inner surface of the mid-case 21 and the outer surface of the cartridge 22 through the mid inlet 212, may be supplied into the cartridge 22 through the inner inlet 225, and may come into contact with the outer surface of the hollow fiber membrane bundle 221. During this process, moisture contained in the second gas flowing along the hollows of the hollow fiber membrane bundle 221 may be transmitted through the hollow fiber membrane bundle 221 to humidify the first gas introduced into the cartridge 22. The humidified first gas may be discharged to the space between the outer surface of the cartridge 22 and the inner surface of the mid-case 21 through the inner outlet 226, may be discharged from the mid-case 21 through the mid outlet 213, and may be supplied to the fuel cell stack. After humidifying the first gas, the second gas may be discharged from the hollow fiber membrane bundle 221, and may then be discharged to the outside through the first cap 3 or the second cap 4. In this case, the second gas may be off-gas discharged from the fuel cell stack.

The humidifying module 2 may include a first packing unit 23.

The first packing unit 23 is airtightly coupled to one end of the mid-case 21 through mechanical assembly. Accordingly, the first packing unit 23 may ensure that the first cap 3 is only in fluid communication with the hollow fiber membrane bundle 221. Consequently, the first packing unit 23 may prevent direct mixing of the first gas and the second gas. The first packing unit 23 may be disposed between the mid-case 21 and the cartridge 22, thereby forming a seal between the mid-case 21 and the cartridge 22. In this case, the cartridge 22 may be inserted into a first insertion hole 231 formed in the first packing unit 23. The first packing unit 23 may be in contact with each of the inner surface of the mid-case 21, the outer surface of the cartridge 22, and the first fixing layer 223. The first packing unit 23 may be airtightly coupled to one end of the mid-case 21 through such contact. In this case, the first packing unit 23 may also be in contact with each of a part of the inner surface of the mid-case 21, a part of the outer surface of the cartridge 22, and a part of the first fixing layer 223.

The humidifying module 2 may include a second packing unit 24.

The second packing unit 24 is airtightly coupled to the other end of the mid-case 21 through mechanical assembly. Accordingly, the second packing unit 24 may ensure that the second cap 4 is only in fluid communication with the hollow fiber membrane bundle 221. Consequently, the second packing unit 24 may prevent direct mixing of the first gas and the second gas. The second packing unit 24 may be disposed between the mid-case 21 and the cartridge 22, thereby forming a seal between the mid-case 21 and the cartridge 22. In this case, the cartridge 22 may be inserted into a second insertion hole 241 formed in the second packing unit 24. The second packing unit 24 may be in contact with each of the inner surface of the mid-case 21, the outer surface of the cartridge 22, and the second fixing layer 224. The second packing unit 24 may be airtightly coupled to the other end of the mid-case 21 through such contact. In this case, the second packing unit 24 may also be in contact with each of a part of the inner surface of the mid-case 21, a part of the outer surface of the cartridge 22, and a part of the second fixing layer 224.

Referring to FIGs. 2 to 4, the first cap 3 is coupled to one end of the humidifying module 2. A space between the first cap 3 and the cartridge 22 may be isolated from the space between the cartridge 22 and the mid-case 21 in a hermetically sealed state by the first packing unit 23. The first cap 3 may include a first port 31. The first port 31 is configured to allow the second gas to flow therethrough. The first port 31 may communicate with the hollows of the hollow fiber membrane bundle 221. In the process of the second gas flowing between the first cap 3 and the hollow fiber membrane bundle 221, therefore, the second gas may be introduced or discharged through the first port 31.

Referring to FIGs. 2 to 4, the second cap 4 is coupled to the other end of the humidifying module 2. The second cap 4 may be disposed so as to be spaced apart from the first cap 3 in the first axis direction (X-axis direction). A space between the second cap 4 and the cartridge 22 may be isolated from the space between the cartridge 22 and the mid-case 21 in a hermetically sealed state by the second packing unit 24. The second cap 4 may include a second port 41. The second port 41 is configured to allow the second gas to flow therethrough. The second port 41 may communicate with the hollows of the hollow fiber membrane bundle 221. In the process of the second gas flowing between the second cap 4 and the hollow fiber membrane bundle 221, therefore, the second gas may be introduced or discharged through the second port 41. When the second gas is introduced through the second port 41, the second gas may be discharged through the first port 31. In this case, the second gas may exchange moisture with the first gas while sequentially passing through the second cap 4, the hollows of the hollow fiber membrane bundle 221, and the first cap 3. When the second gas is discharged through the second port 41, the second gas may be introduced through the first port 31. In this case, the second gas may exchange moisture with the first gas while sequentially passing through the first cap 3, the hollows of the hollow fiber membrane bundle 221, and the second cap 4. Although not shown, resin layers may be formed at the opposite ends of the mid-case 21 in place of the packing units 23 and 24. The resin layers may be formed by hardening a liquid polymer, such as liquid polyurethane resin, using a casting method.

Here, shaking, vibration, or the like may occur in the hollow fiber membrane bundle 221 due to the flow of the first gas introduced into and discharged from the inner case 222, whereby the hollow fiber membrane bundle 221 may be damaged or broken. In order to reduce the possibility of damage to or breakage of hollow fiber membrane bundle 221, the hollow fiber membrane bundle 221 may include a plurality of braided hollow fiber membranes 2211 (shown in FIG. 8).

Referring to FIGs. 2 to 8, each of the braided hollow fiber membranes 2211 is formed by braiding at least two hollow fiber membranes 2211a and 2211b. Since each of the braided hollow fiber membranes 2211 is formed by braiding the plurality of hollow fiber membranes 2211a and 2211b, the braided hollow fiber membrane may be implemented so as to have higher durability and strength than a single hollow fiber membrane 2211a. Accordingly, shaking, vibration, or the like occurring in the braided hollow fiber membranes 2211 due to the flow of the first gas introduced into and discharged from the inner case 222 may be reduced. Consequently, the humidifier 1 for the fuel cell according to the present disclosure may achieve the following effects.

First, the humidifier 1 for the fuel cell according to the present disclosure may reduce the fatigue accumulated in the hollow fiber membrane bundle 221 by reducing the shaking, vibration, or the like occurring in the hollow fiber membrane bundle 221 due to the flow of the first gas introduced into and discharged from the inner case 222 using the braided hollow fiber membranes 2211. Accordingly, the humidifier 1 for the fuel cell according to the present disclosure may reduce the possibility of damage to or breakage of the hollow fiber membrane bundle 221, such as cutting. Therefore, the humidifier 1 for the fuel cell according to the present disclosure may increase the lifespan of the hollow fiber membrane bundle 221, thereby achieving an increase in utilization rate and a reduction in maintenance costs.

Second, the humidifier 1 for the fuel cell according to the present disclosure may reduce the number of times that the hollow fiber membrane bundle 221 comes into contact with the inner case 222 due to the flow of the first gas introduced into and discharged from the inner case 222 using the braided hollow fiber membranes 2211. Accordingly, the humidifier 1 for the fuel cell according to the present disclosure may reduce the possibility of damage to the hollow fiber membrane bundle 221 and the inner case 222, such as scratches caused by friction. Consequently, the humidifier 1 for the fuel cell according to the present disclosure may increase not only the lifespan of the hollow fiber membrane bundle 221 but also the lifespan of the inner case 222.

FIG. 8 shows an embodiment in which the braided hollow fiber membrane 2211 is formed by braiding a first hollow fiber membrane 2211a and a second hollow fiber membrane 2211b; however, the present disclosure is not limited thereto, and the braided hollow fiber membrane 2211 may be formed by braiding three or more hollow fiber membranes. In addition, the braided hollow fiber membrane 2211 may be formed by braiding the same type of hollow fiber membranes, or may be formed by braiding different types of hollow fiber membranes. Here, different types of hollow fiber membranes may mean that the hollow fiber membranes differ in at least one of shape, diameter, and material.

Referring to FIGs. 2 to 10, all of the hollow fiber membranes of the hollow fiber membrane bundle 221 may be implemented as the braided hollow fiber membranes 2211. The hollow fiber membrane bundle 221 may be implemented so as to include different types of hollow fiber membranes. This will be described in detail as follows.

First, referring to FIGs. 2 to 9, the hollow fiber membrane bundle 221 may include a crimped hollow fiber membrane 2212.

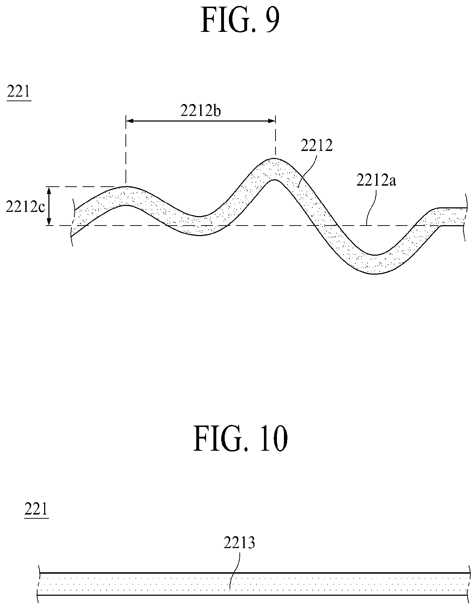

The crimped hollow fiber membrane 2212 is a hollow fiber membrane that is crimped. The hollow fiber membrane bundle 221 may be implemented so as to include different types of hollow fiber membranes using the crimped hollow fiber membrane 2212 and the braided hollow fiber membrane 2211. The crimped hollow fiber membrane 2212 may be implemented as a curved hollow fiber membrane as the crimped hollow fiber membrane is crimped. For example, as shown in FIG. 9, the crimped hollow fiber membrane 2212 may be formed in a wavy pattern. In this case, the crimped hollow fiber membrane 2212 may be formed in a meandering shape that passes through a baseline 2212a a plurality of times so as to include a plurality of crests and a plurality of troughs. The hollow fiber membrane bundle 221 may include a plurality of crimped hollow fiber membranes 2212.

Since the crimped hollow fiber membranes 2212 are crimped, the crimped hollow fiber membranes may have higher porosity than non-crimped hollow fiber membranes. Accordingly, the humidifier 1 for the fuel cell according to the present disclosure may improve the dispersibility or diffusivity of the first gas introduced through the inner inlet 225 by using the crimped hollow fiber membranes 2212, thereby improving the overall humidification performance. In addition, since the crimped hollow fiber membranes 2212 are crimped, a larger effective surface area for humidification may be achieved than in the non-crimped hollow fiber membranes. Accordingly, the humidifier 1 for the fuel cell according to the present disclosure may increase the effective area by using the crimped hollow fiber membranes 2212, and may further increase the humidification performance by increasing the effective area.

When the hollow fiber membrane bundle 221 includes a plurality of braided hollow fiber membranes 2211 and a plurality of crimped hollow fiber membranes 2212, the braided hollow fiber membranes 2211 may be disposed closer to the inner inlet 225 than the crimped hollow fiber membranes 2212. For example, the distance by which the crimped hollow fiber membranes 2212 are spaced apart from the inner inlet 225 may be implemented so as to be greater than the distance by which the braided hollow fiber membranes 2211 are spaced apart from the inner inlet 225. The distance by which the crimped hollow fiber membranes 2212 are spaced apart from the inner inlet 225 may refer to the shortest distance by which the crimped hollow fiber membrane 2212 disposed closest to the inner inlet 225, among the crimped hollow fiber membranes 2212, is spaced apart from the inner inlet 225 in a straight line. The distance by which the braided hollow fiber membranes 2211 are spaced apart from the inner inlet 225 may refer to the shortest distance by which the braided hollow fiber membrane 2211 disposed closest to the inner inlet 225, among the braided hollow fiber membranes 2211, is spaced apart from the inner inlet 225 in a straight line.

The humidifier 1 for the fuel cell according to the present disclosure may achieve the following effects by implementing the braided hollow fiber membranes 2211 so as to be disposed closer to the inner inlet 225 than the crimped hollow fiber membranes 2212, as described above.

First, the humidifier 1 for the fuel cell according to the present disclosure can reduce shaking, vibration, or the like occurring in the hollow fiber membrane bundle 221 due to the flow of the first gas introduced through the inner inlet 225, since the braided hollow fiber membranes 2211 having higher durability and strength than the crimped hollow fiber membranes 2212 are disposed closer to the inner inlet 225. Accordingly, the humidifier 1 for the fuel cell according to the present disclosure may reduce fatigue accumulated in the hollow fiber membrane bundle 221 due to the flow of the first gas introduced through the inner inlet 225, thereby reducing the possibility of damage to or breakage of the hollow fiber membrane bundle 221, such as cutting.

Second, the humidifier 1 for the fuel cell according to the present disclosure may reduce the number of times that the braided hollow fiber membranes 2211 come into contact with the inner case 222 due to the flow of the first gas introduced through the inner inlet 225, and may reduce damage to the braided hollow fiber membranes 2211 even if the braided hollow fiber membranes come into contact with the inner case 222.

When the hollow fiber membrane bundle 221 includes a plurality of braided hollow fiber membranes 2211 and a plurality of crimped hollow fiber membranes 2212, the braided hollow fiber membranes 2211 may be disposed in a first region 222a (shown in FIG. 7) adjacent to the inner inlet 225. The crimped hollow fiber membranes 2212 may be disposed in a second region 222b (shown in FIG. 7) away from the inner inlet 225. Accordingly, the braided hollow fiber membranes 2211 may be disposed outwardly relative to the crimped hollow fiber membranes 2212. The crimped hollow fiber membranes 2212 may be disposed inwardly relative to the braided hollow fiber membranes 2211. The first region 222a may be disposed in a first direction (FD arrow direction, shown in FIG. 7) relative to the second region 222b. The first direction (FD arrow direction) is a direction from the hollow fiber membrane bundle 221 toward the inner inlet 225.

When the hollow fiber membrane bundle 221 includes a plurality of braided hollow fiber membranes 2211 and a plurality of crimped hollow fiber membranes 2212, the braided hollow fiber membranes 2211 may be disposed closer to the inner outlet 226 than the crimped hollow fiber membranes 2212. For example, the distance by which the crimped hollow fiber membranes 2212 are spaced apart from the inner outlet 226 may be implemented so as to be greater than the distance by which the braided hollow fiber membranes 2211 are spaced apart from the inner outlet 226. The distance by which the crimped hollow fiber membranes 2212 are spaced apart from the inner outlet 226 may refer to the shortest distance by which the crimped hollow fiber membrane 2212 disposed closest to the inner outlet 226, among the crimped hollow fiber membranes 2212, is spaced apart from the inner outlet 226 in a straight line. The distance by which the braided hollow fiber membranes 2211 are spaced apart from the inner outlet 226 may refer to the shortest distance by which the braided hollow fiber membrane 2211 disposed closest to the inner outlet 226, among the braided hollow fiber membranes 2211, is spaced apart from the inner outlet 226 in a straight line.

The humidifier 1 for the fuel cell according to the present disclosure may reduce shaking, vibration, or the like occurring in the hollow fiber membrane bundle 221 due to the flow of the first gas discharged through the inner outlet 226 by implementing the braided hollow fiber membranes 2211 so as to be disposed closer to the inner outlet 226 than the crimped hollow fiber membranes 2212, as described above. Accordingly, the humidifier 1 for the fuel cell according to the present disclosure may reduce fatigue accumulated in the hollow fiber membrane bundle 221 due to the flow of the first gas discharged through the inner outlet 226, thereby reducing the possibility of damage to or breakage of the hollow fiber membrane bundle 221, such as cutting. In addition, the humidifier 1 for the fuel cell according to the present disclosure may reduce the number of times that the braided hollow fiber membranes 2211 come into contact with the inner case 222 due to the flow of the first gas discharged through the inner outlet 226, and may reduce damage to the braided hollow fiber membranes 2211 even if the braided hollow fiber membranes come into contact with the inner case 222.

Meanwhile, when the braided hollow fiber membranes 2211 are disposed in the first region 222a and the crimped hollow fiber membranes 2212 are disposed in the second region 222b, the braided hollow fiber membranes 2211 may be disposed closer to both the inner inlet 225 and the inner outlet 226 than the crimped hollow fiber membranes 2212.

As shown in FIG. 9, each of the crimped hollow fiber membranes 2212 may be crimped so as to have a wavelength 2212b of 10 mm to 20 mm. The wavelength 2212b may refer to the distance between one crest and another crest of each of the crimped hollow fiber membranes 2212 in a longitudinal direction. If the wavelength 2212b is implemented so as to be less than 10 mm, the crimped hollow fiber membranes 2212 may cause an excessive increase in the differential pressure between opposite ends of the cartridge 22. If the wavelength 2212b is implemented so as to be greater than 20 mm, the crimped hollow fiber membranes 2212 may not achieve a meaningful difference in dispersibility or diffusivity, the effective area, and the like for the first gas compared to non-crimped hollow fiber membranes. In consideration thereof, the humidifier 1 for the fuel cell according to the present disclosure is provided with crimped hollow fiber membranes 2212 that are crimped so as to have a wavelength 2212b of 10 mm to 20 mm, whereby the risk of damage to or breakage of the hollow fiber membrane bundle 221 due to differential pressure between the opposite ends of the cartridge 22 may be reduced, and the humidification performance may be improved by improving dispersibility or diffusivity and the effective area for the first gas. Each of the crimped hollow fiber membranes 2212 may be implemented so as to have uniform wavelengths 2212b throughout. Each of the crimped hollow fiber membranes 2212 may be implemented so as to have non-uniform wavelengths 2212b throughout.

Each of the crimped hollow fiber membranes 2212 may be crimped so as to have an amplitude 2212c of 0.1 mm or more. Here, the distance by which the crest is spaced apart from the baseline 2212a may correspond to the amplitude 2212c. The distance by which the trough is spaced apart from the baseline 2212a may also correspond to the amplitude 2212c. If the amplitude 2212c is implemented so as to be less than 0.1 mm, the crimped hollow fiber membranes 2212 may not achieve a meaningful difference in dispersibility or diffusivity, the effective area, and the like for the first gas compared to non-crimped hollow fiber membranes. In consideration thereof, the humidifier 1 for the fuel cell according to the present disclosure may be provided with crimped hollow fiber membranes 2212 that are crimped so as to have an amplitude 2212c of 0.1 mm or more, whereby the humidification performance may be improved by improving dispersibility or diffusivity and the effective area for the first gas. Each of the crimped hollow fiber membranes 2212 may be implemented so as to have non-uniform amplitudes 2212c throughout. Although not shown, each of the crimped hollow fiber membranes 2212 may be implemented so as to have uniform amplitudes 2212c throughout.

Next, referring to FIGs. 2 to 10, the hollow fiber membrane bundle 221 may include a non-crimped hollow fiber membrane 2213.

The non-crimped hollow fiber membrane 2213 is a hollow fiber membrane that is not crimped. The hollow fiber membrane bundle 221 may be implemented so as to include different types of hollow fiber membranes including the non-crimped hollow fiber membrane 2213 and the braided hollow fiber membrane 2211. The hollow fiber membrane bundle 221 may include a plurality of non-crimped hollow fiber membranes 2213. As shown in FIG. 10, each of the non-crimped hollow fiber membranes 2213 may be a straight hollow fiber membrane that is not crimped.

When the hollow fiber membrane bundle 221 includes a plurality of braided hollow fiber membranes 2211 and a plurality of non-crimped hollow fiber membranes 2213, the braided hollow fiber membranes 2211 may be disposed closer to the inner inlet 225 than the non-crimped hollow fiber membranes 2213. For example, the distance by which the non-crimped hollow fiber membranes 2213 are spaced apart from the inner inlet 225 may be implemented so as to be greater than the distance by which the braided hollow fiber membranes 2211 are spaced apart from the inner inlet 225. The distance by which the non-crimped hollow fiber membranes 2213 are spaced apart from the inner inlet 225 may refer to the shortest distance by which the non-crimped hollow fiber membrane 2213 disposed closest to the inner inlet 225, among the non-crimped hollow fiber membranes 2213, is spaced apart from the inner inlet 225 in a straight line. The distance by which the braided hollow fiber membranes 2211 are spaced apart from the inner inlet 225 may refer to the shortest distance by which the braided hollow fiber membrane 2211 disposed closest to the inner inlet 225, among the braided hollow fiber membranes 2211, is spaced apart from the inner inlet 225 in a straight line.

The humidifier 1 for the fuel cell according to the present disclosure may reduce shaking, vibration, or the like occurring in the hollow fiber membrane bundle 221 due to the flow of the first gas introduced through the inner inlet 225 by implementing the braided hollow fiber membranes 2211 so as to be disposed closer to the inner inlet 225 than the non-crimped hollow fiber membranes 2213, as described above. In addition, the humidifier 1 for the fuel cell according to the present disclosure may reduce the number of times that the braided hollow fiber membranes 2211 come into contact with the inner case 222 due to the flow of the first gas introduced through the inner inlet 225.

When the hollow fiber membrane bundle 221 includes a plurality of braided hollow fiber membranes 2211 and a plurality of non-crimped hollow fiber membranes 2213, the braided hollow fiber membranes 2211 may be disposed in the first region 222a. The non-crimped hollow fiber membranes 2213 may be disposed in the second region 222b. Accordingly, the braided hollow fiber membranes 2211 may be disposed outwardly relative to the non-crimped hollow fiber membranes 2213. The non-crimped hollow fiber membranes 2213 may be disposed inwardly relative to the braided hollow fiber membranes 2211.

When the hollow fiber membrane bundle 221 includes a plurality of braided hollow fiber membranes 2211 and a plurality of non-crimped hollow fiber membranes 2213, the braided hollow fiber membranes 2211 may be disposed closer to the inner outlet 226 than the non-crimped hollow fiber membranes 2213. For example, the distance by which the non-crimped hollow fiber membranes 2213 are spaced apart from the inner outlet 226 may be implemented so as to be greater than the distance by which the braided hollow fiber membranes 2211 are spaced apart from the inner outlet 226. The distance by which the non-crimped hollow fiber membranes 2213 are spaced apart from the inner outlet 226 may refer to the shortest distance by which the non-crimped hollow fiber membrane 2213 disposed closest to the inner outlet 226, among the non-crimped hollow fiber membranes 2213, is spaced apart from the inner outlet 226 in a straight line. The distance by which the braided hollow fiber membranes 2211 are spaced apart from the inner outlet 226 may refer to the shortest distance by which the braided hollow fiber membrane 2211 disposed closest to the inner outlet 226, among the braided hollow fiber membranes 2211, is spaced apart from the inner outlet 226 in a straight line.

The humidifier 1 for the fuel cell according to the present disclosure may reduce shaking, vibration, or the like occurring in the hollow fiber membrane bundle 221 due to the flow of the first gas discharged through the inner outlet 226 by implementing the braided hollow fiber membranes 2211 so as to be disposed closer to the inner outlet 226 than the non-crimped hollow fiber membranes 2213, as described above. In addition, the humidifier 1 for the fuel cell according to the present disclosure may reduce the number of times that the braided hollow fiber membranes 2211 come into contact with the inner case 222 due to the flow of the first gas discharged through the inner outlet 226.

Meanwhile, when the braided hollow fiber membranes 2211 are disposed in the first region 222a and the non-crimped hollow fiber membranes 2213 are disposed in the second region 222b, the braided hollow fiber membranes 2211 may be disposed closer to both the inner inlet 225 and the inner outlet 226 than the non-crimped hollow fiber membranes 2213.

The hollow fiber membrane bundle 221 may include any one of the crimped hollow fiber membrane 2212 and the non-crimped hollow fiber membrane 2213 in addition to the braided hollow fiber membrane 2211. The hollow fiber membrane bundle 221 may include both the crimped hollow fiber membrane 2212 and the non-crimped hollow fiber membrane 2213 in addition to the braided hollow fiber membrane 2211. When the hollow fiber membrane bundle 221 includes at least one of the crimped hollow fiber membrane 2212 and the non-crimped hollow fiber membrane 2213 in addition to the braided hollow fiber membrane 2211, as described above, the braided hollow fiber membranes 2211 may be disposed closer to the inner inlet 225 than at least one of the crimped hollow fiber membranes 2212 and the non-crimped hollow fiber membranes 2213. The braided hollow fiber membranes 2211 may be disposed closer to the inner outlet 226 than at least one of the crimped hollow fiber membranes 2212 and the non-crimped hollow fiber membranes 2213.

Meanwhile, if the hollow fiber membrane bundle 221 includes both the crimped hollow fiber membrane 2212 and the non-crimped hollow fiber membrane 2213 in addition to the braided hollow fiber membrane 2211, the crimped hollow fiber membranes 2212 may be disposed closer to the inner inlet 225 than the non-crimped hollow fiber membranes 2213. Accordingly, the humidifier 1 for the fuel cell according to the present disclosure may increase the flow rate of the first gas flowing to the non-crimped hollow fiber membranes 2213 through the crimped hollow fiber membranes 2212, since the crimped hollow fiber membranes 2212 having higher porosity than the non-crimped hollow fiber membranes 2213 are disposed closer to the inner inlet 225. Consequently, the humidifier 1 for the fuel cell according to the present disclosure may improve dispersibility or diffusivity of the first gas using the crimped hollow fiber membranes 2212, thereby increasing the overall humidification performance. In addition, the humidifier 1 for the fuel cell according to the present disclosure may reduce the differential pressure between the opposite ends of the cartridge 22 using the non-crimped hollow fiber membrane 2213. Consequently, the humidifier 1 for the fuel cell according to the present disclosure may reduce the risk of damage to or breakage of the hollow fiber membrane bundle 221 and may increase humidification performance through reduced differential pressure.

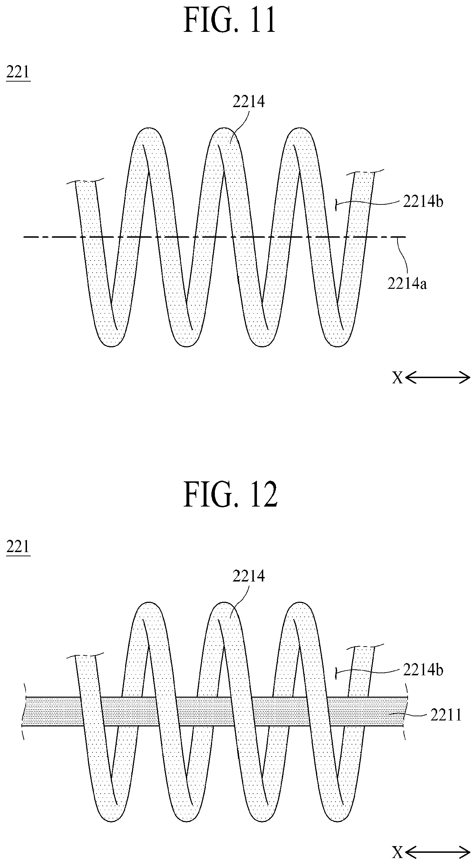

Referring to FIGs. 2 to 12, the hollow fiber membrane bundle 221 may include a plurality of three-dimensionally crimped hollow fiber membranes 2214 (shown in FIGs. 11 and 12). FIG. 12 schematically shows the braided hollow fiber membrane 2211.

Each of the three-dimensionally crimped hollow fiber membranes 2214 is a hollow fiber membrane that is crimped. Each of the three-dimensionally crimped hollow fiber membranes 2214 may be crimped so as to extend in the first axial direction (X-axis direction) while surrounding the outside of a baseline 2214a. Accordingly, each of the three-dimensionally crimped hollow fiber membranes 2214 may be implemented in the form of a three-dimensional crimp. For example, each of the three-dimensionally crimped hollow fiber membranes 2214 may be formed so as to surround the outside of the baseline 2214a in a helical form. The baseline 2214a may be implemented as a straight line parallel to the first axial direction (X-axis direction). Meanwhile, each of the crimped hollow fiber membranes 2212 may be implemented in the form of a two-dimensional crimp. Each of the crimped hollow fiber membranes 2212 may also be implemented as a three-dimensional crimp.

Each of the three-dimensionally crimped hollow fiber membranes 2214 may be unevenly spaced apart from the baseline 2214a while extending in the first axial direction (X-axis direction). Each of the three-dimensionally crimped hollow fiber membranes 2214 may be uniformly spaced apart from the baseline 2214a while extending in the first axial direction (X-axis direction). The baseline 2214a may be disposed on the inside 2214b of each of the three-dimensionally crimped hollow fiber membranes 2214. One end of each of the three-dimensionally crimped hollow fiber membranes 2214 may be fixed by the first fixing layer 223, and the other end of each of the three-dimensionally crimped hollow fiber membranes 2214 may be fixed by the second fixing layer 224.

Although the effective area of each of the three-dimensionally crimped hollow fiber membranes 2214 may be increased as each of the three-dimensionally crimped hollow fiber membranes extends in the first axial direction (X-axis direction) while surrounding the outside of the baseline 2214a, the strength may be relatively reduced. Accordingly, shaking, vibration, or the like may occur in the three-dimensionally crimped hollow fiber membranes 2214 due to the flow of the first gas introduced into and discharged from the inner case 222. When excessive shaking, vibration, or the like occurs in the three-dimensionally crimped hollow fiber membranes 2214, the three-dimensional crimp shape given to each of the three-dimensionally crimped hollow fiber membranes 2214 may be lost, entanglement may occur between the three-dimensionally crimped hollow fiber membranes 2214, and the three-dimensionally crimped hollow fiber membranes 2214 may be pushed to one side of the inner case 222, whereby the humidification performance may be reduced.

In order to prevent this, each of the three-dimensionally crimped hollow fiber membranes 2214 may be crimped so as to extend in the first axial direction (X-axis direction) while surrounding the outside of each of the braided hollow fiber membranes 2211. The braided hollow fiber membranes 2211 may be disposed on the inside 2214b of each of the three-dimensionally crimped hollow fiber membranes 2214, thereby supporting each of the three-dimensionally crimped hollow fiber membranes 2214 such that the movable distance of each of the three-dimensionally crimped hollow fiber membranes 2214 is limited.

Accordingly, the humidifier 1 for the fuel cell according to the present disclosure may improve the humidification performance by increasing the effective area using the three-dimensionally crimped hollow fiber membranes 2214, and may reduce the movable distance of each of the three-dimensionally crimped hollow fiber membranes 2214 due to the flow of the first gas introduced into and discharged from the inner case 222 using the braided hollow fiber membranes 2211.

Consequently, the humidifier 1 for the fuel cell according to the present disclosure may be maintained with an increased effective area using the three-dimensionally crimped hollow fiber membranes 2214 by preventing the three-dimensional crimp shape given to each of the three-dimensionally crimped hollow fiber membranes 2214 from being lost. In addition, the humidifier 1 for the fuel cell according to the present disclosure may prevent the three-dimensionally crimped hollow fiber membranes 2214 from being damaged or broken by preventing entanglement between the three-dimensionally crimped hollow fiber membranes 2214 using the braided hollow fiber membranes 2211. In addition, the humidifier 1 for the fuel cell according to the present disclosure may be implemented such that the three-dimensionally crimped hollow fiber membranes 2214 have overall uniform humidification performance, since the three-dimensionally crimped hollow fiber membranes 2214 may be prevented from being pushed to one side of the inner case 222 using the braided hollow fiber membranes 2211.

Meanwhile, since each of the braided hollow fiber membranes 2211 is also formed using hollow fiber membranes, the humidifier 1 for the fuel cell according to the present disclosure may further increase the effective area using the three-dimensionally crimped hollow fiber membranes 2214 in addition to increasing the effective area using the braided hollow fiber membranes 2211, thereby further improving the humidification performance. Each of the braided hollow fiber membranes 2211 may be formed by braiding the crimped hollow fiber membranes 2212. Each of the braided hollow fiber membranes 2211 may be formed by braiding the three-dimensionally crimped hollow fiber membranes 2214. Each of the braided hollow fiber membranes 2211 may be formed by braiding the non-crimped hollow fiber membranes 2213. Each of the braided hollow fiber membranes 2211 may be formed by braiding at least two of the non-crimped hollow fiber membrane 2213, the crimped hollow fiber membrane 2212, and the three-dimensionally crimped hollow fiber membrane 2214. The braided hollow fiber membranes 2211 may be disposed spaced apart from each other. One end of each of the braided hollow fiber membranes 2211 may be fixed by the first fixing layer 223, and the other end of each of the braided hollow fiber membranes 2211 may be fixed by the second fixing layer 224. Since each of the braided hollow fiber membranes 2211 is disposed on the inside 2214b of the three-dimensionally crimped hollow fiber membrane 2214, the three-dimensionally crimped hollow fiber membranes 2214 may be formed so as to surround the outside of each of the braided hollow fiber membranes 2211 in a helical form. The braided hollow fiber membranes 2211 may be disposed parallel to the baseline 2214a.

Referring to FIGs. 2 to 15, the hollow fiber membrane bundle 221 may include a plurality of combined hollow fiber membranes 2215.

Each of the combined hollow fiber membranes 2215 may be implemented so as to be partially crimped or partially crimped in different shapes. In this regard, a description will be given in detail based on a single combined hollow fiber membrane 2215.

The combined hollow fiber membrane 2215 may include a first crimping portion 22151 and a connection portion 22152.

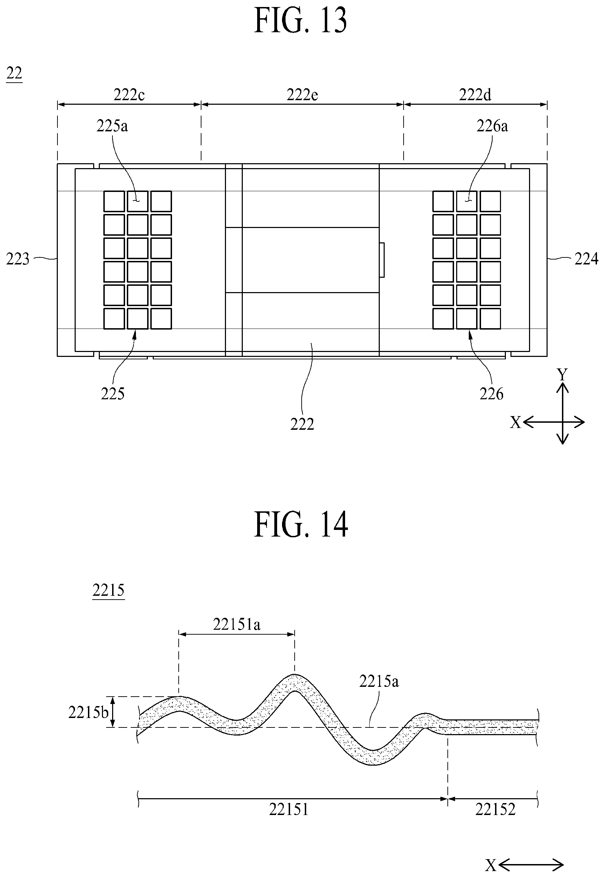

The first crimping portion 22151 is a part that is crimped. The first crimping portion 22151 may be a part of the combined hollow fiber membrane 2215. The first crimping portion 22151 may be formed so as to be curved by crimping. For example, as shown in FIG. 14, the first crimping portion 22151 may be formed in a wavy pattern. In this case, the first crimping portion 22151 may be formed in a meandering shape that passes through a baseline 2215a a plurality of times so as to include a plurality of crests and a plurality of troughs. That is, the first crimping portion 22151 may be formed so as to have a wavelength 22151a and an amplitude 22151b. The baseline 2215a may be an imaginary line parallel to the first axial direction (X-axis direction). The wavelength 22151a may refer to the distance between one crest and another crest of the first crimping portion 22151 in a longitudinal direction. The longitudinal direction of the first crimping portion 22151 may be a direction parallel to the first axial direction (X-axis direction). The wavelengths 22151a of the first crimping portion 22151 may be formed so as to have non-uniform lengths. The wavelengths 22151a of the first crimping portion 22151 may be formed so as to have a uniform length. The amplitude 22151b may refer to the distance by which the crest of the first crimping portion 22151 is spaced apart from the baseline 2215a. The amplitude 22151b may refer to the distance by which the trough of the first crimping portion 22151 is spaced apart from the baseline 2215a. The amplitudes 22151b of the first crimping portion 22151 may be formed so as to have non-uniform lengths. The amplitudes 22151b of the first crimping portion 22151 may be formed so as to have a uniform length.

The connection portion 22152 extends from the first crimping portion 22151. The connection portion 22152 may correspond to a part of the combined hollow fiber membrane 2215. The connection portion 22152 may be formed so as to have a smaller amplitude than the first crimping portion 22151. Accordingly, the combined hollow fiber membrane 2215 may be implemented so as to be partially crimped or partially crimped in different shapes through the first crimping portion 22151 and the connection portion 22152. When the combined hollow fiber membrane 2215 is implemented so as to be partially crimped, the connection portion 22152 may not be crimped. In this case, the connection portion 22152 may be formed so as to have a straight line. A hollow of the connection portion 22152 and the baseline 2215a may be disposed on the same line. When the combined hollow fiber membrane 2215 is implemented so as to be partially crimped in different shapes, the connection portion 22152 may be crimped so as to have an amplitude less than the amplitude 22151b of the first crimping portion 22151.

Accordingly, the humidifier 1 for the fuel cell according to the present disclosure may achieve the following effects.

First, since the first crimping portion 22151 is crimped so as to have a larger amplitude 22151b than the connection portion 22152, the first crimping portion may have higher porosity than the connection portion 22152. Accordingly, the humidifier 1 for the fuel cell according to the present disclosure may increase the flow rate of the first gas passing between the combined hollow fiber membranes 2215 using the first crimping portion 22151. Consequently, the humidifier 1 for the fuel cell according to the present disclosure may improve dispersibility or diffusivity of the first gas introduced into the inner case 222, thereby increasing the overall humidification performance.

Second, the humidifier 1 for the fuel cell according to the present disclosure may increase the effective area of the combined hollow fiber membranes 2215 using the first crimping portion 22151 of each of the combined hollow fiber membranes 2215. Consequently, the humidifier 1 for the fuel cell according to the present disclosure may increase the humidification performance by increasing the effective area of the combined hollow fiber membranes 2215.

Third, when all of the combined hollow fiber membranes 2215 are implemented so as to have the first crimping portion 22151, the differential pressure between the opposite ends of the cartridge 22 increases, whereby there is a high risk of damage to or breakage of the combined hollow fiber membranes 2215, and the humidification performance may be reduced. In contrast, in the humidifier 1 for the fuel cell according to the present disclosure, the combined hollow fiber membrane 2215 is implemented so as to have a combination of the first crimping portion 22151 and the connection portion 22152, whereby the differential pressure between the opposite ends of the cartridge 22 may be reduced using the connection portion 22152. Consequently, the humidifier 1 for the fuel cell according to the present disclosure may reduce the risk of damage to or breakage of the combined hollow fiber membrane 2215, and may increase humidification performance through reduced differential pressure.

The first crimping portion 22151 may be disposed at a position corresponding to any one of the inner inlet 225 and the inner outlet 226.

When the first crimping portion 22151 is disposed at a position corresponding to the inner inlet 225, the first gas may flow toward the first crimping portion 22151 after being introduced into the inner case 222 through the inner inlet 225. Accordingly, the humidifier 1 for the fuel cell according to the present disclosure may increase the flow rate of the first gas introduced into the inner case 222 through the inner inlet 225 to pass between the first crimping portions 22151 of the combined hollow fiber membranes 2215. Consequently, the humidifier 1 for the fuel cell according to the present disclosure may increase the proportion involved in humidification of the part of the hollow fiber membrane bundle 221 located relatively inwardly of the inner case 222. That is, the membrane contact area of the first gas may be increased. Accordingly, the overall humidification performance of the humidifier 1 for the fuel cell according to the present disclosure may be increased.

The first crimping portion 22151 may be disposed at a position facing the inner inlet 225. The first crimping portion 22151 may be disposed so as to overlap the inner inlet 225 in the first axial direction (X-axis direction). In this case, the connection portion 22152 may be disposed at a position spaced apart from the inner inlet 225 in the first axial direction (X-axis direction). Accordingly, the humidifier 1 for the fuel cell according to the present disclosure may reduce the differential pressure between the opposite ends of the cartridge 22 in the course of the flow of the first gas toward the inner outlet 226 using the connection portion 22152. The first crimping portion 22151 may be disposed in an inflow region 222c (shown in FIG. 13) of the inner case 222 in the first axial direction (X-axis direction). The inflow region 222c is an inner region of the inner case 222 where the first gas is introduced into the inner case 222 through the inner inlet 225. The inflow region 222c may include predetermined distances from the inner inlet 225 to opposite sides in the first axial direction (X-axis direction). Meanwhile, one end of the first crimping portion 22151 may be fixed by the first fixing layer 223. In this case, the other end of the first crimping portion 22151 may be connected to the connection portion 22152. The first crimping portion 22151 and the connection portion 22152 may be integrally formed.

When the first crimping portion 22151 is disposed at a position corresponding to the inner outlet 226, the first gas may flow from the interior of the inner case 222 toward the first crimping portion 22151 in order to be discharged through the inner outlet 226. Accordingly, the humidifier 1 for the fuel cell according to the present disclosure may be implemented so as to make it difficult for the first gas to flow toward the inner outlet 226 using the first crimping portion 22151, whereby it is possible to increase the residence time of the first gas in the inner case 222. Consequently, the humidifier 1 for the fuel cell according to the present disclosure may increase the overall humidification performance by increasing the residence time.

The first crimping portion 22151 may be disposed at a position facing the inner outlet 226. The first crimping portion 22151 may be disposed so as to overlap the inner outlet 226 in the first axial direction (X-axis direction). In this case, the connection portion 22152 may be disposed at a position spaced apart from the inner outlet 226 in the first axial direction (X-axis direction). Accordingly, the humidifier 1 for the fuel cell according to the present disclosure may reduce the differential pressure between the opposite ends of the cartridge 22 in the course of the flow of the first gas toward the inner outlet 226 using the connection portion 22152. The first crimping portion 22151 may be disposed in an outflow region 222d (shown in FIG. 13) of the inner case 222 in the first axial direction (X-axis direction). The outflow region 222d is an inner region of the inner case 222 where the first gas is discharged from the interior of the inner case 222 through the inner outlet 226. The outflow region 222d may include predetermined distances from the inner outlet 226 to opposite sides in the first axial direction (X-axis direction). Meanwhile, one end of the first crimping portion 22151 may be fixed by the second fixing layer 224. In this case, the other end of the first crimping portion 22151 may be connected to the connection portion 22152. The first crimping portion 22151 and the connection portion 22152 may be integrally formed.

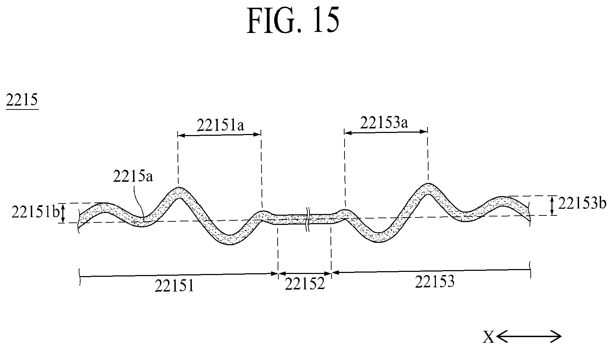

Referring to FIGs. 2 to 15, each of the combined hollow fiber membranes 2215 may include a second crimping portion 22153 (shown in FIG. 15).

The second crimping portion 22153 is a part that is crimped. The second crimping portion 22153 may correspond to a part of the combined hollow fiber membrane 2215. The second crimping portion 22153 may be formed so as to be curved by crimping. For example, as shown in FIG. 15, the second crimping portion 22153 may be formed in a wavy pattern. In this case, the second crimping portion 22153 may be formed in a meandering shape that passes through the baseline 2215a a plurality of times so as to include a plurality of crests and a plurality of troughs. That is, the second crimping portion 22153 may be formed so as to have a wavelength 22153a and an amplitude 22153b. The wavelength 22153a may refer to the distance between one crest and another crest of the second crimping portion 22153 in a longitudinal direction. The wavelengths 22153a of the second crimping portion 22153 may be formed so as to have non-uniform lengths. The wavelengths 22153a of the second crimping portion 22153 may be formed so as to have a uniform length. The amplitude 22153b may refer to the distance by which the crest of the second crimping portion 22153 is spaced apart from the baseline 2215a. The amplitude 22153b may refer to the distance by which the trough of the second crimping portion 22153 is spaced apart from the baseline 2215a. The amplitudes 22153b of the second crimping portion 22153 may be formed so as to have non-uniform lengths. The amplitudes 22153b of the second crimping portion 22153 may be formed so as to have a uniform length.

When the second crimping portion 22153 is provided, the connection portion 22152 may be disposed between the second crimping portion 22153 and the first crimping portion 22151 in the first axial direction (X-axis direction). The second crimping portion 22153 may be fixed by the second fixing layer 224. The first crimping portion 22151 may be fixed by the first fixing layer 223.

When the second crimping portion 22153 is provided, the second crimping portion 22153 may be disposed at a position corresponding to the inner outlet 226. The first crimping portion 22151 may be disposed at a position corresponding to the inner inlet 225. The connection portion 22152 may be disposed between the inner inlet 225 and the inner outlet 226 in the first axial direction (X-axis direction). Accordingly, the humidifier 1 for the fuel cell according to the present disclosure may increase the dispersibility or diffusivity of the first gas introduced into the inner case 222 using the first crimping portion 22151, may increase the residence time of the first gas in the inner case 222 using the second crimping portion 22153, and may reduce the differential pressure between the opposite ends of the cartridge 22 using the connection portions 22152. Consequently, in the humidifier 1 for the fuel cell according to the present disclosure, not only may the humidification performance be increased, but also the lifespan may be extended by reducing the risk of damage to or breakage of the combined hollow fiber membrane 2215. In this case, the first crimping portion 22151 may be disposed in the inflow region 222c, and the second crimping portion 22153 may be disposed in the outflow region 222d. The connection portion 22152 may be disposed in a connection region 222e (shown in FIG. 13) of the inner case 222. The connection region 222e is an inner region of the inner case 222 disposed between the inflow region 222c and the outflow region 222d in the first axial direction (X-axis direction).

Referring to FIGs. 2 to 15, the second crimping portion 22153 may be formed so as to have a shorter wavelength than the first crimping portion 22151. That is, the wavelength 22151a of the first crimping portion 22151 may be implemented so as to be greater than the wavelength 22153a of the second crimping portion 22153. Accordingly, the humidifier 1 for the fuel cell according to the present disclosure is implemented such that the diffusivity or dispersibility of the first gas using the first crimping portion 22151 can be further improved and the residence time of the first gas using the second crimping portion 22153 can be further increased.

As shown in FIGs. 14 and 15, the first crimping portion 22151 may be crimped so as to have a wavelength 22151a of 10 mm to 20 mm. If the wavelength 22151a is implemented so as to be less than 10 mm, the first crimping portion 22151 may cause an excessive increase in the differential pressure between the opposite ends of the cartridge 22. If the wavelength 22151a is implemented so as to be greater than 20 mm, the first crimping portion 22151 may not achieve a meaningful difference in dispersibility or diffusivity, the effective area, and the like for the first gas compared to the case in which the first crimping portion is not crimped. In consideration thereof, the humidifier 1 for the fuel cell according to the present disclosure is provided with a first crimping portion 22151 that is crimped so as to have a wavelength 22151a of 10 mm to 20 mm, whereby the risk of damage to or breakage of the combined hollow fiber membranes 2215 due to the differential pressure between the opposite ends of the cartridge 22 may be reduced, and the humidification performance may be improved by improving the dispersibility or diffusivity and the effective area for the first gas.

As shown in FIGs. 14 and 15, the first crimping portion 22151 may be crimped so as to have an amplitude 22151b of 0.1 mm or more. If the amplitude 22151b is implemented so as to be less than 0.1 mm, the first crimping portion 22151 may not achieve a meaningful difference in dispersibility or diffusivity, the effective area, and the like for the first gas compared to the case in which the first crimping portion is not crimped. In consideration thereof, the humidifier 1 for the fuel cell according to the present disclosure is provided with a first crimping portion 22151 that is crimped so as to have an amplitude 22151b of 0.1 mm or more, whereby the humidification performance may be improved by improving the dispersibility or diffusivity and the effective area for the first gas.

The first crimping portion 22151 may be crimped so as to have an amplitude 22151b of 5 mm or less. If the amplitude 22151b is implemented so as to be greater than 5 mm, the first crimping portion 22151 may cause an excessive increase in the differential pressure between the opposite ends of the cartridge 22. In consideration thereof, the humidifier 1 for the fuel cell according to the present disclosure is provided with a first crimping portion 22151 that is crimped so as to have an amplitude 22151b of 5 mm or less, whereby the risk of damage to or breakage of the combined hollow fiber membrane 2215 due to the differential pressure between the opposite ends of the cartridge 22 may be reduced, and the humidification performance may be improved by reducing the differential pressure.

As shown in FIG. 15, the second crimping portion 22153 may be crimped so as to have a wavelength 22153a of 5 mm to 15 mm. If the wavelength 22153a is implemented so as to be less than 5 mm, the second crimping portion 22153 may cause an excessive increase in the differential pressure between the opposite ends of the cartridge 22. If the wavelength 22153a is implemented so as to be greater than 15 mm, the second crimping portion 22153 may not achieve a meaningful difference in increasing the residence time of the first gas compared to the case where the second crimping portion is crimped. In consideration thereof, the humidifier 1 for the fuel cell according to the present disclosure is provided with a second crimping portion 22153 that is crimped so as to have a wavelength 22153a of 5 mm to 15 mm, whereby the risk of damage to or breakage of the combined hollow fiber membrane 2215 due to the differential pressure between the opposite ends of the cartridge 22 may be reduced, and the humidification performance may be improved by increasing the residence time of the first gas.

As shown in FIG. 15, the second crimping portion 22153 may be crimped so as to have an amplitude 22153b of 0.1 mm or more. If the amplitude 22153b is implemented so as to be less than 0.1 mm, the second crimping portion 22153 may not achieve a meaningful difference in increasing the residence time of the first gas compared to the case where the second crimping portion is not crimped. In view of this, the humidifier 1 for the fuel cell according to the present disclosure is provided with a second crimping portion 22153 that is crimped so as to have an amplitude 22153b of 0.1 mm or more, whereby the humidification performance may be improved by increasing the residence time of the first gas.

The second crimping portion 22153 may be crimped so as to have an amplitude 22153b of 3 mm or less. If the amplitude 22153b is implemented so as to be greater than 3 mm, the second crimping portion 22153 may cause an excessive increase in the differential pressure between the opposite ends of the cartridge 22. In consideration thereof, the humidifier 1 for the fuel cell according to the present disclosure is provided with a second crimping portion 22153 that is crimped so as to have an amplitude 22153b of 3 mm or less, whereby the risk of damage to or breakage of the combined hollow fiber membrane 2215 due to the differential pressure between the opposite ends of the cartridge 22 may be reduced, and the humidification performance may be improved by reducing the differential pressure.

When the hollow fiber membrane bundle 221 includes the braided hollow fiber membranes 2211 and the combined hollow fiber membranes 2215, the braided hollow fiber membranes 2211 may be disposed closer to the inner inlet 225 than the combined hollow fiber membranes 2215. For example, the distance by which the combined hollow fiber membranes 2215 are spaced apart from the inner inlet 225 may be implemented so as to be greater than the distance by which the braided hollow fiber membranes 2211 are spaced apart from the inner inlet 225. The distance by which the combined hollow fiber membranes 2215 are spaced apart from the inner inlet 225 may refer to the shortest distance by which the combined hollow fiber membrane 2215 disposed closest to the inner inlet 225, among the combined hollow fiber membranes 2215, is spaced apart from the inner inlet 225 in a straight line. The distance by which the braided hollow fiber membranes 2211 are spaced apart from the inner inlet 225 may refer to the shortest distance by which the braided hollow fiber membrane 2211 disposed closest to the inner inlet 225, among the braided hollow fiber membranes 2211, is spaced apart from the inner inlet 225 in a straight line.

Since the braided hollow fiber membranes 2211 are implemented so as to be disposed closer to the inner inlet 225 than the combined hollow fiber membranes 2215, as described above, in the humidifier 1 for the fuel cell according to the present disclosure, the braided hollow fiber membranes 2211 having higher durability and strength than the combined hollow fiber membranes 2215 may be disposed closer to the inner inlet 225. Consequently, the humidifier 1 for the fuel cell according to the present disclosure may reduce shaking, vibration, and the like occurring in the hollow fiber membrane bundle 221 due to the flow of the first gas introduced through the inner inlet 225. Accordingly, the humidifier 1 for the fuel cell according to the present disclosure may reduce fatigue accumulated in the hollow fiber membrane bundle 221 due to the flow of the first gas introduced through the inner inlet 225, thereby reducing the possibility of damage to or breakage of the hollow fiber membrane bundle 221, such as cutting. In addition, the humidifier 1 for the fuel cell according to the present disclosure may reduce the number of times that the braided hollow fiber membranes 2211 come into contact with the inner case 222 due to the flow of the first gas introduced through the inner inlet 225, and may reduce damage to the braided hollow fiber membranes 2211 even if the braided hollow fiber membranes come into contact with the inner case 222.

In this case, the braided hollow fiber membranes 2211 may be disposed in the first region 222a (shown in FIG. 7), and the combined hollow fiber membranes 2215 may be disposed in the second region 222b (shown in FIG. 7). Accordingly, the braided hollow fiber membranes 2211 may be disposed outwardly relative to the combined hollow fiber membranes 2215. The combined hollow fiber membranes 2215 may be disposed inwardly relative to the braided hollow fiber membranes 2211. When the braided hollow fiber membranes 2211 are disposed in the first region 222a and the combined hollow fiber membranes 2215 are disposed in the second region 222b, the braided hollow fiber membranes 2211 may be disposed closer to both the inner inlet 225 and the inner outlet 226 than the combined hollow fiber membranes 2215.

Meanwhile, when each of the combined hollow fiber membranes 2215 includes the first crimping portion 22151 and the second crimping portion 22153, the braided hollow fiber membranes 2211 may be disposed closer to the inner inlet 225 than the first crimping portions 22151. The braided hollow fiber membranes 2211 may be disposed closer to the inner outlet 226 than the second crimping portions 22153.

The present disclosure described above is not limited to the above embodiments and the accompanying drawings, and it will be obvious to a person having ordinary skill in the art to which the present disclosure pertains that various substitutions, modifications, and alterations are possible without departing from the technical idea of the present disclosure.

## Claims

1. A cartridge provided in a humidifier for a fuel cell, the humidifier being configured to humidify dry gas to be supplied to a fuel cell stack using wet gas, the cartridge comprising:
an inner case having openings formed at opposite ends;
an inner inlet formed at the inner case, the inner inlet being configured to introduce first gas into the inner case;
an inner outlet disposed spaced apart from the inner inlet in a first axis direction, the inner outlet being configured to discharge the first gas from the inner case; and
a hollow fiber membrane bundle received in the inner case, wherein
the hollow fiber membrane bundle comprises a plurality of braided hollow fiber membranes, each of the braided hollow fiber membranes being formed by braiding at least two hollow fiber membranes.

2. The cartridge according to claim 1, wherein
the hollow fiber membrane bundle comprises a plurality of crimped hollow fiber membranes, each of the crimped hollow fiber membranes being crimped, and
the braided hollow fiber membranes are disposed closer to the inner inlet than the crimped hollow fiber membranes.

3. The cartridge according to claim 2, wherein each of the crimped hollow fiber membranes is crimped so as to have a wavelength of 10 mm to 20 mm and an amplitude of 0.1 mm or more.

4. The cartridge according to claim 1, wherein
the hollow fiber membrane bundle comprises a plurality of non-crimped hollow fiber membranes, each of the non-crimped hollow fiber membranes being not crimped, and
the braided hollow fiber membranes are disposed closer to the inner inlet than the non-crimped hollow fiber membranes.

5. The cartridge according to claim 1, wherein
the hollow fiber membrane bundle comprises at least one of a plurality of crimped hollow fiber membranes, each of the crimped hollow fiber membranes being crimped, and a plurality of non-crimped hollow fiber membranes, each of the non-crimped hollow fiber membranes being not crimped, and
the braided hollow fiber membranes are disposed closer to the inner outlet than at least one of the crimped hollow fiber membranes and the non-crimped hollow fiber membranes.

6. The cartridge according to claim 1, wherein
the hollow fiber membrane bundle comprises a plurality of three-dimensionally crimped hollow fiber membranes, and
each of the three-dimensionally crimped hollow fiber membranes is crimped so as to extend in the first axial direction while surrounding an outside of the braided hollow fiber membrane.

7. The cartridge according to claim 6, wherein each of the three-dimensionally crimped hollow fiber membranes is formed so as to surround the outside of the braided hollow fiber membrane in a helical form.

8. The cartridge according to claim 1, wherein
the hollow fiber membrane bundle comprises a plurality of combined hollow fiber membranes,
each of the combined hollow fiber membranes comprises a first crimping portion that is crimped, and a connection portion extending from the first crimping portion, the connection portion having a smaller amplitude than the first crimping portion, and
the braided hollow fiber membranes are disposed closer to the inner inlet than the combined hollow fiber membranes.

9. The cartridge according to claim 8, wherein
each of the combined hollow fiber membranes comprises a second crimping portion that is crimped,
the first crimping portions are disposed at positions corresponding to the inner inlet,
the second crimping portions are disposed at positions corresponding to the inner outlet, and
the connection portions are disposed between the first crimping portion and the second crimping portion in the first axial direction.

10. The cartridge according to claim 9, wherein each of the first crimping portions is formed so as to have a longer wavelength than each of the second crimping portions.

11. A humidifier for a fuel cell, the humidifier comprising:
a humidifying module configured to humidify dry gas to be supplied to a fuel cell stack using wet gas;
a first cap coupled to one end of the humidifying module; and
a second cap coupled to the other end of the humidifying module, wherein
the humidifying module comprises:
a mid-case having open opposite ends; and
at least one cartridge received in the mid-case, and
the cartridge comprises:
an inner case having openings formed at opposite ends;
an inner inlet formed at the inner case, the inner inlet being configured to introduce first gas into the inner case;
an inner outlet disposed spaced apart from the inner inlet in a first axis direction, the inner outlet being configured to discharge the first gas from the inner case; and
a hollow fiber membrane bundle received in the inner case, and
the hollow fiber membrane bundle comprises a plurality of braided hollow fiber membranes, each of the braided hollow fiber membranes being formed by braiding at least two hollow fiber membranes.

12. The humidifier for the fuel cell according to claim 11, wherein
the hollow fiber membrane bundle comprises a plurality of crimped hollow fiber membranes, each of the crimped hollow fiber membranes being crimped, and
the braided hollow fiber membranes are disposed closer to the inner inlet than the crimped hollow fiber membranes.

13. The humidifier for the fuel cell according to claim 12, wherein each of the crimped hollow fiber membranes is crimped so as to have a wavelength of 10 mm to 20 mm and an amplitude of 0.1 mm or more.

14. The humidifier for the fuel cell according to claim 11, wherein
the hollow fiber membrane bundle comprises a plurality of non-crimped hollow fiber membranes, each of the non-crimped hollow fiber membranes being not crimped, and
the braided hollow fiber membranes are disposed closer to the inner inlet than the non-crimped hollow fiber membranes.

15. The humidifier for the fuel cell according to claim 11, wherein
the hollow fiber membrane bundle comprises at least one of a plurality of crimped hollow fiber membranes, each of the crimped hollow fiber membranes being crimped, and a plurality of non-crimped hollow fiber membranes, each of the non-crimped hollow fiber membranes being not crimped, and
the braided hollow fiber membranes are disposed closer to the inner outlet than at least one of the crimped hollow fiber membranes and the non-crimped hollow fiber membranes.

16. The cartridge of the humidifier for the fuel cell according to claim 11, wherein
the hollow fiber membrane bundle comprises a plurality of three-dimensionally crimped hollow fiber membranes, and
each of the three-dimensionally crimped hollow fiber membranes is crimped so as to extend in the first axial direction while surrounding an outside of the braided hollow fiber membrane.

17. The cartridge of the humidifier for the fuel cell according to claim 16, wherein each of the three-dimensionally crimped hollow fiber membranes is formed so as to surround the outside of the braided hollow fiber membrane in a helical form.

18. The cartridge of the humidifier for the fuel cell according to claim 11, wherein
the hollow fiber membrane bundle comprises a plurality of combined hollow fiber membranes,
each of the combined hollow fiber membranes comprises a first crimping portion that is crimped, and a connection portion extending from the first crimping portion, the connection portion having a smaller amplitude than the first crimping portion, and
the braided hollow fiber membranes are disposed closer to the inner inlet than the combined hollow fiber membranes.

19. The cartridge of the humidifier for the fuel cell according to claim 18, wherein
each of the combined hollow fiber membranes comprises a second crimping portion that is crimped,
the first crimping portions are disposed at positions corresponding to the inner inlet,
the second crimping portions are disposed at positions corresponding to the inner outlet, and
the connection portions are disposed between the first crimping portion and the second crimping portion in the first axial direction.

20. The cartridge of the humidifier for the fuel cell according to claim 19, wherein each of the first crimping portions is formed so as to have a longer wavelength than each of the second crimping portions.
